# DEMANDE DE BREVET EUROPEEN

(11) **EP 1 316 443 A1**
(43) Date de publication de la demande: **04.06.2003**
(21) Numéro de dépôt: 02292948.3
(22) Date de dépôt: 29.11.2002
(51) Int. Cl.: B60B 33/00, B62B 3/14

(54) **Dispositif de montage d'une roulette sur un châssis de chariot**

(30) Priorité: 03.12.2001 FR 0115586
(71) Demandeur: GUITEL, 93310 Le Pré Saint-Gervais (FR)
(72) Inventeur: Alaimo, Salvatore, 94100 St. Maur des Fossés (FR); Roy, Jean-Pierre, 93700 Drancy (FR)
(74) Mandataire: Le Bras, Hervé

(57) **Abrégé**

L'invention concerne un dispositif de montage d'une roulette sur un châssis de chariot qui comporte deux fils horizontaux (21, 22) espacés et deux entretoises verticales (23, 24) espacées soudées sur une face des deux fils. Le dispositif comporte une chape (1) recevant l'axe de rotation (2) de la roue et portant dans sa partie supérieure une patte de fixation (5). La patte de fixation (5) est globalement cylindrique et sa partie supérieure est fixée contre les deux fils (21, 22), entre les entretoises (23, 24) par un étrier (30) à double cambrage dont une extrémité est en appui derrière une entretoise (23) et dont l'autre extrémité est en appui sur la face avant de la deuxième entretoise opposée aux fils. La première entretoise (23) et la patte (5) sont disposées de part et d'autre de la zone à double cambrage, et un interstice sépare la patte de la deuxième entretoise. Cet interstice est traversé par un boulon (42) prenant appui sur les faces opposées de l'étrier et de la deuxième entretoise. Des méplats (18) formés sur la patte immobilisent cette dernière en rotation par rapport au châssis (20). Une nervure horizontale (37) coopérant avec une rainure formée sur la patte (5) immobilise verticalement cette dernière par rapport au châssis (20).

## Description

L'invention concerne le montage des roues sur les chariots ou similaires et notamment sur les chariots mis à la disposition du public dans les magasins en libre-service.

Elle concerne plus précisément un dispositif pour le montage d'une roue sur le châssis d'un chariot ou similaire, ce châssis comportant une ceinture inférieure formée par deux fils horizontaux espacés verticalement et deux entretoises verticales; ou montants, espacées et soudées sur une face desdits deux fils, et ledit dispositif comportant une chape destinée à recevoir l'axe de rotation de ladite roue, une patte verticale de fixation portée par la partie supérieure de ladite chape et destinée à être appliquée contre lesdits deux fils entre lesdites deux entretoises, et des moyens pour fixer ladite patte sur ledit châssis.

FR 2 191 630 montre un tel dispositif dans lequel la patte de fixation présente, dans sa partie supérieure, une plaque de forme rectangulaire que l'on dispose entre les deux entretoises. Cette plaque comporte au moins un trou pour le passage d'un organe de fixation qui traverse un deuxième trou ménagé dans une contre-plaque placée contre la face opposée des deux entretoises entre les deux fils de ceinture. Cette plaque relativement volumineuse est réalisée par matriçage à chaud, ce qui est une opération coûteuse.

Le but de l'invention est de proposer un dispositif de montage qui soit plus léger et moins coûteux.

L'invention atteint son but par le fait que la patte de fixation est globalement cylindrique et les moyens de fixation de ladite patte sur le châssis comportent un étrier à double cambrage dont une première extrémité est appliquée contre une première entretoise sur la face disposée du côté desdits deux fils et dont l'autre extrémité est appliquée contre la deuxième entretoise sur la face opposée auxdits deux fils, ladite première entretoise et ladite patte étant disposées de part et d'autre de la zone à double cambrage de l'étrier, et un interstice séparant ladite patte de ladite deuxième entretoise, ledit étrier comportant un trou en regard dudit interstice pour le passage d'un organe de serrage prenant appui sur les faces opposées dudit étrier et de ladite deuxième entretoise, lesdits moyens de fixation comportant en outre des moyens pour immobiliser verticalement ladite patte de fixation par rapport au châssis, et des moyens pour immobiliser en rotation ladite patte par rapport audit châssis.

Les avantageuses dispositions suivantes sont en outre de préférence adoptées.

Le diamètre de la patte de fixation est sensiblement égal au diamètre des entretoises.

La hauteur de l'étrier est sensiblement égale à l'intervalle séparant les deux fils de ceinture.

Les moyens pour immobiliser en rotation la patte de fixation par rapport au châssis comportent au moins un méplat formé sur la patte et sur lequel l'un des fils de ceinture est en appui.

Le méplat est formé à l'extrémité supérieure de la patte de fixation et coopère avec le fil supérieur.

Les moyens pour immobiliser verticalement la patte de fixation par rapport au châssis comportent une gorge latérale ménagée dans la patte et dans laquelle loge en partie le fil inférieur.

Selon une autre disposition, les moyens pour immobiliser verticalement la patte de fixation par rapport au châssis comportent une rainure horizontale ménagée dans la patte et une nervure horizontale formée sur l'étrier et destinée à loger dans ladite rainure.

Avantageusement, l'étrier présente en regard de la patte de fixation au moins une nervure verticale destinée à appuyer sur la patte de fixation dans une région éloignée de la zone à double cambrage de l'étrier.

De préférence, l'étrier est symétrique par rapport à un plan médian horizontal.

Selon une autre caractéristique avantageuse de l'invention, l'étrier présente en outre, en regard de l'interstice, des moyens pour éviter un basculement de la patte de fixation dans le plan vertical des entretoises.

Selon une première forme de réalisation, ces moyens sont constitués par une ondulation formée dans l'étrier, susceptible de venir en appui sur les faces en vis-à-vis de la deuxième entretoise et de la patte de fixation sous l'action de l'organe de serrage.

Selon une deuxième forme de réalisation, ces moyens sont constitués par deux oreilles trapézoïdales formées respectivement sur les bords inférieur et supérieur de l'étrier et dont les flancs sont susceptibles de venir en appui sur les faces en vis-à-vis de la patte de fixation sous l'action de l'organe de serrage.

La patte de fixation est également symétrique par rapport à un plan médian vertical parallèle aux fils.

Très avantageusement, la patte de fixation est réalisée par matriçage à froid.

D'autres avantages et caractéristiques de l'invention ressortiront à la lecture de la description de plusieurs modes de réalisation, faite ci-après à titre d'exemples et en référence aux dessins annexés, dans lesquels :
La figure 1 est une vue en élévation représentant une roue montée sur le châssis d'un chariot grâce à un dispositif selon un premier mode de réalisation de l'invention ;
la figure 2 est une coupe verticale selon la ligne II-II de la figure 1;
la figure 3 est une coupe horizontale selon la ligne III-III de la figure 1 ;
la figure 4 est une vue en perspective de l'étrier selon le premier mode de réalisation de l'invention ;
la figure 5 montre un deuxième mode de réalisation de la patte de fixation ;
la figure 6 est une vue en élévation du dispositif de fixation selon le deuxième mode de réalisation de l'invention ;
la figure 7 est une coupe selon la ligne VII-VII de la figure 6 ;
la figure 8 est une coupe selon la ligne VIII-VIII de la figure 6 ;
la figure 9 est une vue en perspective de l'étrier selon le deuxième mode de réalisation de l'invention ;
la figure 10 montre le montage de deux roues au moyen de deux dispositifs identiques selon le deuxième mode de réalisation de l'invention ;
la figure 11 est une vue en perspective d'un troisième mode de réalisation de la patte de fixation ;
la figure 12 est une vue en élévation du dispositif de fixation selon un quatrième mode de réalisation de l'invention ;
la figure 13 est une coupe verticale selon la ligne XIII-XIII de la figure 12 ;
la figure 14 est une coupe horizontale selon la ligne XIV-XIV de la figure 12 ;
la figure 15 est une vue en élévation du dispositif de fixation selon un cinquième mode de réalisation de l'invention ;
la figure 16 est une coupe selon la ligne XVI-XVI de la figure 15;
la figure 17 est une coupe selon la ligne XVII-XVII de la figure 15;
la figure 18 est une vue en perspective de l'étrier selon le cinquième mode de réalisation de l'invention ; et
la figure 19 est une vue en perspective d'une variante de l'étrier selon le cinquième mode de réalisation de l'invention.

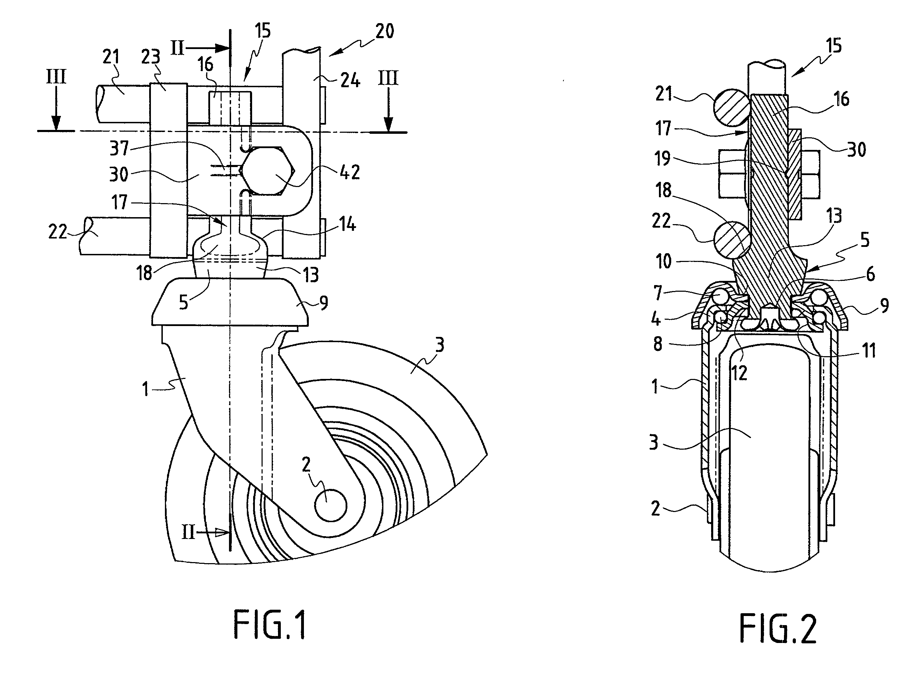

Ainsi que cela est montré sur les figures 1 et 2, le dispositif selon l'invention comporte une chape 1 destinée à recevoir l'axe de rotation 2 d'une roue 3. La partie supérieure 4 de cette chape porte une patte de fixation verticale 5 qui s'étend vers le haut. L'extrémité inférieure de la patte 5 présente un téton 6 engagé à travers une ouverture ménagée dans la partie supérieure de la chape 1.

Lorsque la roue 3 n'est pas pivotable autour d'un axe vertical, la chape est fixée sur le téton 6 par sertissage de l'extrémité inférieure du téton 6.

Lorsque la roue 3 peut pivoter autour d'un axe vertical, ainsi que cela est montré sur les figures 1 et 2, deux roulements 7 et 8 sont disposés de part et d'autre de la partie supérieure de la chape 1. Le roulement supérieur 7 est disposé entre celle-ci et un capuchon supérieur 9 placé contre un épaulement 10 du téton 6. Quant au roulement inférieur 8, il est placé entre la partie supérieure de la chape 1 et une cuvette de retenue 11. Le capuchon 9 et la cuvette de retenue 11 sont enfilés sur le téton 6 et ils sont retenus par sertissage de l'extrémité inférieure du téton avec interposition éventuelle d'une rondelle 12. Le capuchon 9 et la cuvette de retenue 11 sont alors parfaitement solidarisés avec la patte de fixation 5. Mais la chape 1 peut tourner autour du téton 6 grâce aux roulements 7 et 8.

La patte verticale 5 est destinée à être fixée sur le châssis 20 d'un chariot qui comporte une ceinture inférieure constituée de deux fils horizontaux espacés verticalement, à savoir un fil supérieur référencé 21 et un fil inférieur référencé 22. Ces fils 21 et 22 sont reliés par des entretoises verticales, espacées horizontalement, et référencées 23 et 24 sur les dessins. Ces fils 21 et 22, et entretoises, 23 et 24, sont de préférence métalliques, et les entretoises sont soudées sur une face des fils. Les fils 21 et 22 ainsi que les entretoises 23 et 24 sont de préférence cylindriques, et ont des diamètres voisins. Les distances séparant les deux fils 21 et 22, et les distances séparant les deux entretoises adjacentes 23 et 24 sont sensiblement égales à trois fois le diamètre des fils et entretoises.

La patte de fixation 5 présente dans sa partie inférieure, au-dessus du téton 6, un bourrelet 13 annulaire raccordé au téton 6 par l'épaulement 10, et raccordé à la partie supérieure 15 de la patte 5 par une surface 14 à pente douce. La partie supérieure 15 de la patte 5 se présente sous la forme d'une tige globalement cylindrique ayant un diamètre sensiblement égal au diamètre des fils 21 et 22 et des entretoises 23 et 24. La longueur de la partie supérieure 15 est supérieure à la distance séparant les deux fils 21 et 22, et est telle que l'extrémité supérieure 16 de la patte 5 peut être en appui contre le fil supérieur 21, lorsque la surface 14 est en appui contre le fil inférieur 22, la patte 5 étant alors disposée entre les entretoises 23 et 24 et étant sensiblement parallèle à ces dernières. C'est dans cette position que la patte de fixation 5 est immobilisée sur le châssis 20 à l'aide de moyens de fixation.

La forme filiforme de la patte de fixation 5 permet de réaliser cette dernière par matriçage à froid.

Les figures 1 à 4 montrent un premier mode de réalisation préféré des moyens de fixation selon l'invention.

La patte de fixation 5 est symétrique par rapport à un plan médian vertical, de telle manière qu'elle puisse être fixée indifféremment sur le côté gauche ou le côté droit du chariot qui en sera équipé. La partie supérieure 15 de la patte 5 présente sur deux faces opposées un méplat vertical 17 qui se termine au niveau de la surface 14 par une surface cylindrique 18 dont le rayon de courbure est sensiblement égal au rayon du fil inférieur 22.

Une rainure horizontale 19, visible sur la figure 2, est ménagée dans la région médiane de chaque méplat 17. L'un des méplats 17 est destiné à être appliqué contre les faces des fils 21 et 22 disposées du côté des entretoises 23 et 24, la surface cylindrique 18 étant alors en appui contre une face latérale inférieure de la tige inférieure 22.

La partie supérieure 15 de la patte de fixation 5 est retenue contre les fils 21 et 22 par un étrier 30 à double cambrage, dont la hauteur est sensiblement égale à la distance séparant les deux fils 21 et 22, et dont la longueur est telle que, lorsqu'une première extrémité 31 de l'étrier 30 est disposée contre la face arrière 23a d'une entretoise, 23 par exemple, située du côté des fils 21 et 22, l'autre extrémité 32 de cet étrier 30 se trouve en regard de la face avant 24b de l'autre entretoise 24, cette face avant 24b étant située du côté opposé aux fils 21 et 22. Dans cette position de montage, la zone à double cambrage 33 de l'étrier 30 est interposée entre l'entretoise 23 et la partie supérieure 15 de la patte 5. Cette partie supérieure 15 loge dans la cambrure 34 de l'étrier 30 la plus proche de l'extrémité 32, et l'entretoise 23 loge dans la cambrure 35 la plus proche de l'extrémité 31.

Pour faire en sorte que la partie supérieure 15 se positionne correctement dans la cambrure 34 lors du montage, l'étrier 30 présente sur sa face arrière en regard des fils 21 et 22, entre la cambrure 34 et l'extrémité 32, deux nervures verticales alignées 36a, 36b qui appuient sur la partie supérieure 15 de la patte 5 dans une région éloignée de la zone à double cambrage de l'étrier 30.

L'étrier 30 présente en plus sur cette même face entre les nervures 36a et 36b, et au voisinage de la cambrure 34, une nervure horizontale 37 destinée à loger dans la rainure horizontale 19 du méplat externe 17 de la partie supérieure 15 de la patte 5.

La partie supérieure 15 de la patte 5 est séparée de l'entretoise 24 par un interstice 40 dont la largeur est sensiblement égale au diamètre d'une entretoise.

L'étrier 30 présente entre la cambrure 34 et son extrémité 32, en regard de l'interstice 40, un trou 39 destiné au passage du fût 41 d'un boulon 42 dont la tête est en appui sur l'étrier 30 et dont l'écrou 43, qui comporte une embase élargie, est en appui à la fois sur l'entretoise 24 et sur le méplat interne 17 de la partie supérieure de la patte de fixation 5. Le diamètre du fût 41 est au plus égal à la largeur de l'interstice 40.

Du fait que la hauteur de l'étrier 30 est sensiblement égale à la distance séparant les fils 21 et 22, après montage, l'étrier 30 est immobilisé verticalement par rapport au châssis 20. Les cambrures 34 et 35 sont dessinées de telle manière que la partie supérieure 15 de la patte 5 est serrée entre l'étrier 30 et les fils 21 et 22 après boulonnage. La patte de fixation 5 est immobilisée en rotation autour d'un axe vertical par rapport au châssis 20 par les méplats 17 en appui respectivement contre les fils 21 et 22 et contre la face interne de l'étrier, et également par la surface cylindrique 18 en appui contre le fil inférieur 22. La patte de fixation 5 est immobilisée verticalement par rapport au châssis 20 par la coopération de la nervure horizontale 37 de l'étrier 30 avec la rainure horizontale 19 du méplat externe 17 de la patte de fixation 5.

Ainsi que cela a déjà été mentionné ci-dessus, la patte de fixation 5 est symétrique par rapport à un plan médian vertical parallèle aux deux méplats 17. L'étrier 30 est également de préférence symétrique par rapport à un plan médian horizontal passant par le centre du trou 39 et par la nervure horizontale 37. Ainsi, le même ensemble de roue et d'étrier peut être fixé indifféremment à droite et à gauche d'un chariot.

L'immobilisation en rotation de la patte de fixation 5 par rapport au châssis 20 est particulièrement nécessaire pour le montage d'une roue non pivotante autour d'un axe vertical. Elle peut également être utile pour le montage de roues pivotantes équipées de systèmes de blocage ou de freinage.

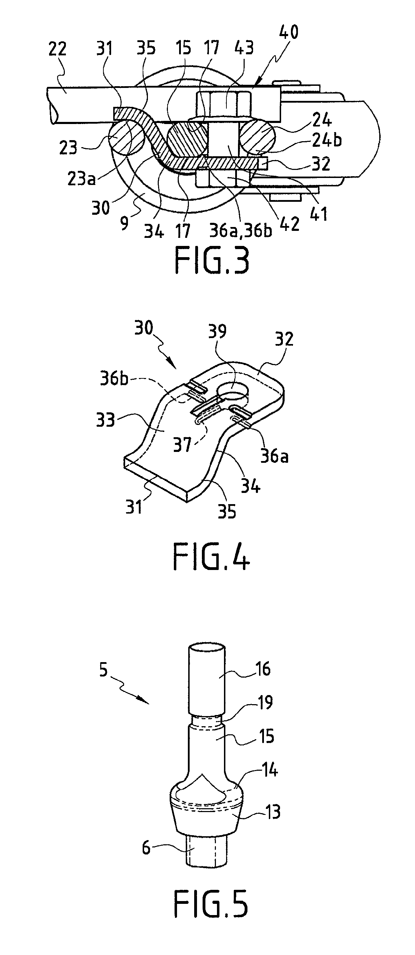

Les figures 5 à 10 montrent un deuxième mode de réalisation des moyens de fixation de la patte 5 sur le châssis 20.

Ce deuxième mode diffère du premier mode de réalisation décrit ci-dessus par les dispositions suivantes.

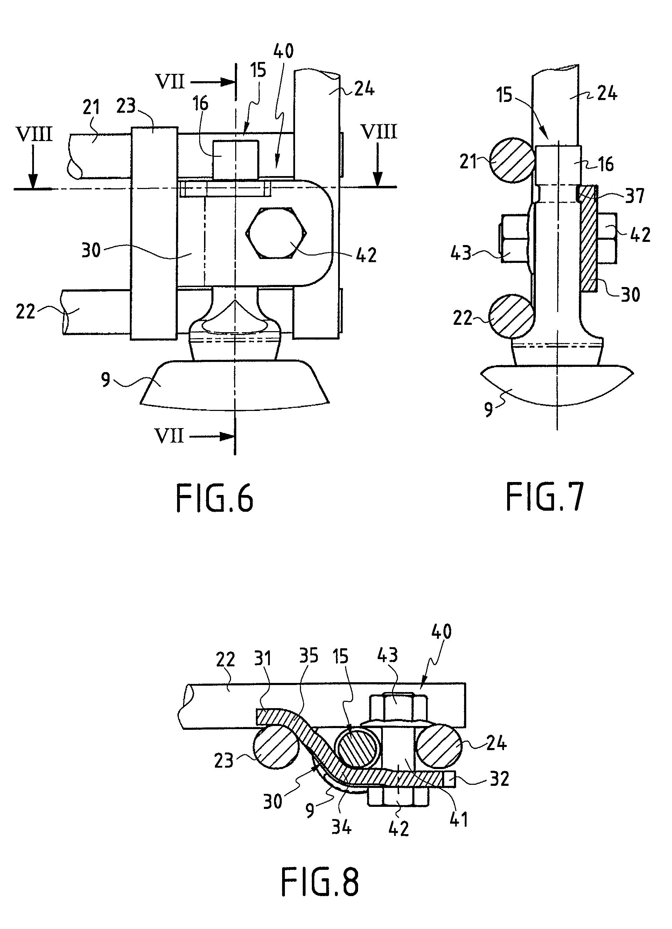

La patte de fixation 5 ne comporte pas les méplats 17, seules des surfaces cylindriques 18 sont formées sur des faces opposées du bourrelet 13, l'une de ces surfaces cylindriques étant destinée à être en appui contre la face externe inférieure du fil inférieur 22 pour empêcher la rotation autour d'un axe vertical de la patte de fixation 5 par rapport au châssis 20. La partie supérieure 15 de la patte 5 est cylindrique et la rainure horizontale 19 se présente sous la forme d'une gorge annulaire dans laquelle vient loger une nervure horizontale 37 formée sur la face interne de l'étrier 30 dans la région voisine de la cambrure 34. La nervure 37 peut être formée dans le plan médian de l'étrier 30, mais elle peut également être disposée dans sa région supérieure, comme montré sur la figure 7, ou dans sa région inférieure. La gorge 19 sera positionnée par rapport à la surface cylindrique 18 en fonction de la position de la nervure horizontale 37 de l'étrier 30, pour que, après montage, une surface cylindrique 18 soit en appui contre le fil inférieur 22 et pour que la nervure horizontale 37 engage la gorge 19 afin d'immobiliser verticalement la patte de fixation.

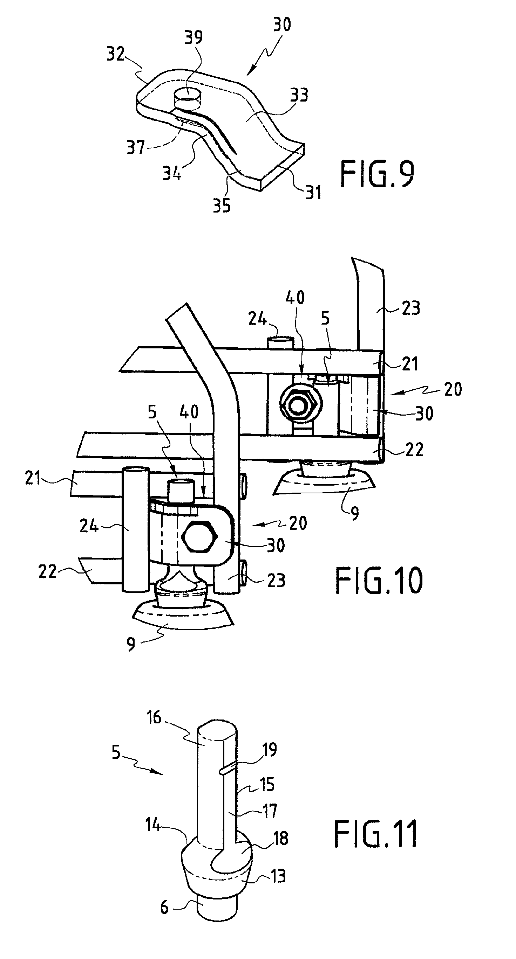

La patte de fixation 5 est de préférence symétrique par rapport à un plan médian parallèle aux surfaces cylindriques 18 afin de permettre le montage sur le côté droit ou le côté gauche du châssis. Dans le cas où l'étrier 30 n'est pas symétrique par rapport au plan médian horizontal, la figure 10 montre comment monter le même type d'étrier à droite et à gauche du chariot. Il suffit d'inverser les rôles des entretoises avant et arrière du chariot entre le côté gauche et le côté droit. L'extrémité 31 de l'étrier 30 coopère avec l'entretoise arrière 23 à droite du châssis 20 et coopère avec l'entretoise avant 24 à gauche du châssis 20.

L'étrier 30 montré sur la figure 9 ne présente pas les nervures verticales 36a et 36b visibles sur la figure 4, mais il pourrait aventageusement en comporter. En l'absence des nervures verticales 36a et 36b, la partie supérieure 15 cylindrique est maintenue positivement dans la cambrure 34 par le fût 41 du boulon 42 interposé entre cette partie supérieure 15 et l'entretoise 24.

La figure 11 montre un troisième mode de réalisation de l'invention qui diffère du premier mode de réalisation par le fait que la rainure horizontale 19 est au voisinage de l'extrémité supérieure de la patte de fixation 5 et se positionne au montage légèrement en dessous du fil supérieur 21. Cette patte de fixation 5 sera fixée sur le châssis 20 par un étrier 30 semblable à celui de la figure 4, mais avec la nervure horizontale 37 disposée près du bord supérieur de l'étrier 30.

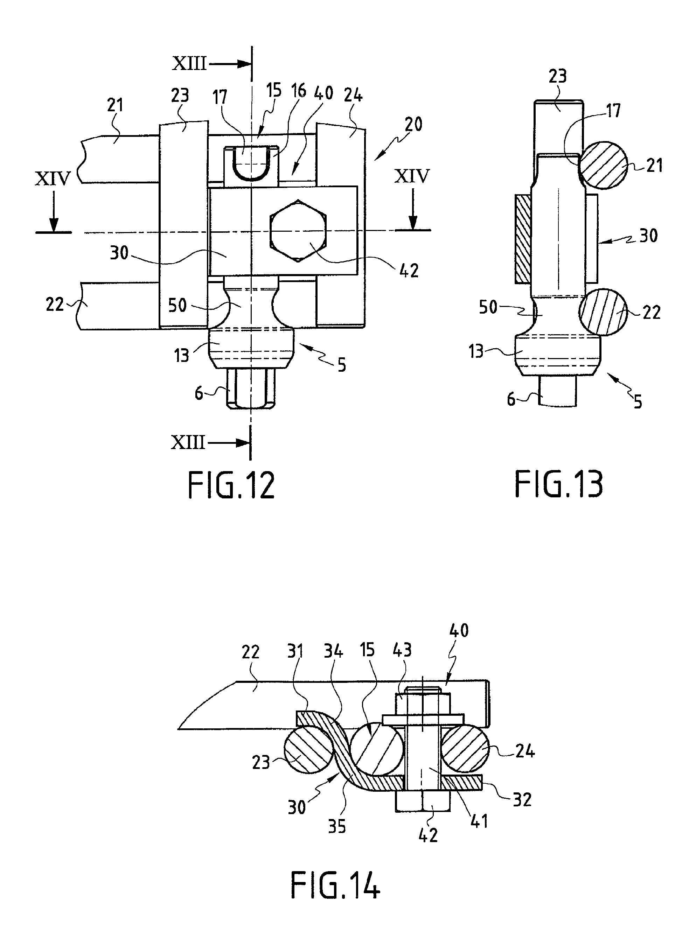

Les figures 12 à 14 montrent un quatrième mode de réalisation de l'invention. Selon ce quatrième mode de réalisation, la patte de fixation 5 comporte une partie supérieure 15, de forme cylindrique qui se raccorde au bourrelet 13 par une gorge annulaire 50 torique de diamètre égal au diamètre du fil inférieur 22, et dans laquelle s'engage la face externe de ce fil inférieur 22 afin d'immobiliser axialement la patte de fixation 5 par rapport au châssis 20. L'extrémité supérieure 16 de la patte de fixation 5 présente deux méplats opposés 17 dont l'un vient en appui contre la face externe du fil supérieur 21.

L'étrier 30 utilisé pour le montage de la patte de fixation selon le quatrième mode de réalisation est semblable à celui décrit dans le deuxième mode de réalisation si ce n'est que cet étrier ne comporte pas de rainure horizontale 37. Il pourrait par contre présenter sur sa face interne les nervures verticales 36a et 36b décrits dans le premier mode de réalisation de l'invention.

L'étrier 30 est de préférence une pièce métallique réalisée par emboutissage à froid.

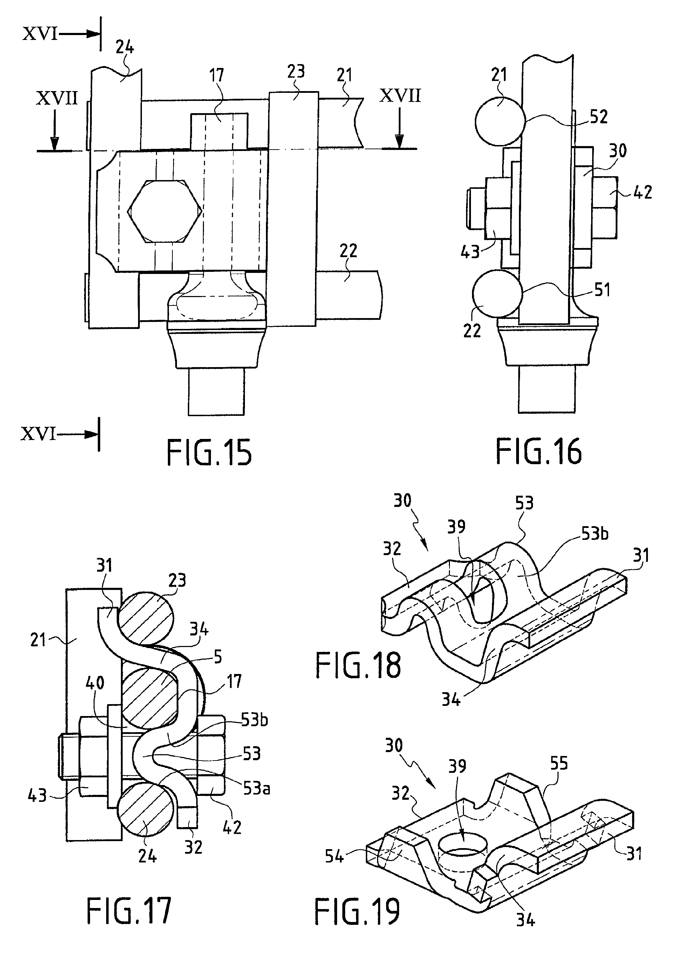

Les figures 15 à 18 montrent un cinquième mode de réalisation de l'invention. Ce cinquième mode de réalisation diffère du premier mode de réalisation par le fait que la patte de fixation 5 ne présente qu'un seul méplat 17 qui vient appuyer sur une face interne de l'étrier 30, et présente en revanche sur le côté opposé au méplat 17 deux gorges horizontales 51 et 52 dans lesquelles s'engagent les fils 21 et 22 afin d'immobiliser la patte de fixation 5 verticalement. L'étrier 30, montré sur la figure 18, présente en regard de l'interstice 40, une ondulation 53, créée lors de son emboutissage, qui s'engage dans l'interstice 40, et dont les parois latérales 53a, 53b viennent en appui positif contre les faces en vis-à-vis de l'entretoise 24 et de la patte de fixation 5, lors du serrage de l'écrou 43 sur le boulon 42. Grâce à l'ondulation 53, la patte de fixation 5 est disposée entre la cambrure 34 et la paroi latérale 53b, et est en appui contre ces deux parois, ce qui empêche le basculement de la patte de fixation dans le plan vertical des deux entretoises 23 et 24.

La figure 19 montre une variante de réalisation de l'étrier 30 utilisé avec le cinquième mode de l'invention. Cet étrier 30 diffère de celui montré sur la figure 18 par le fait que l'ondulation 53 est remplacée par deux oreilles trapézoïdales 54 et 55 formées, lors de l'emboutissage de l'étrier 30, respectivement sur ses bords supérieur et inférieur et qui s'engagent dans l'interstice 40.

Les flancs latéraux des deux oreilles 54 et 55 viennent appuyer contre les faces en vis-à-vis de l'entretoise 24 et de la patte de fixation 5 sous l'action des moyens de serrage, ce qui évite le basculement ou pivotement de la patte de fixation 5 dans le plan des entretoises 23 et 24.

Il est à noter que les étriers 30 montrés sur les figures 18 et 19 peuvent être utilisés avec des pattes de fixation différentes de celle montrée sur la figure 15, et peuvent comporter en outre des nervures coopérant avec des gorges ménagées dans la patte de fixation 5 pour immobiliser cette dernière dans le sens de son axe.

## Revendications

1. Dispositif pour le montage d'une roue sur le châssis (20) d'un chariot ou similaire, ledit châssis comportant une ceinture inférieure formée par deux fils horizontaux (21, 22) espacés verticalement et deux entretoises verticales (23, 24), ou montants, espacées et soudées sur une face desdits deux fils, et ledit dispositif comportant une chape (1) destinée à recevoir l'axe de rotation de ladite roue, une patte verticale (5) de fixation portée par la partie supérieure de ladite chape et destinée à être appliquée contre lesdits deux fils (21, 22) entre lesdites entretoises (23, 24), et des moyens pour fixer ladite patte sur ledit châssis,
**caractérisé par le fait que** la patte de fixation (5) est globalement cylindrique et les moyens de fixation de ladite patte (5) sur le châssis (20) comportent un étrier (30) à double cambrage (34, 35) dont une première extrémité (31) est appliquée contre une première entretoise (23) sur la face disposée du côté desdits deux fils (21, 22) et dont l'autre extrémité (32) est appliquée contre la deuxième entretoise (24) sur la face opposée auxdits deux fils, ladite première entretoise (23) et ladite patte (5) étant disposées de part et d'autre de la zone à double cambrage de l'étrier (30), et un interstice (40) séparant ladite patte (5) de ladite deuxième entretoise (24), ledit étrier (30) comportant un trou (39) en regard dudit interstice (40) pour le passage d'un organe de serrage prenant appui sur les faces opposées dudit étrier (30) et de ladite deuxième entretoise (24), lesdits moyens de fixation comportant en outre des moyens pour immobiliser verticalement ladite patte de fixation (5) par rapport au châssis (20), et des moyens pour immobiliser en rotation ladite patte (5) par rapport audit châssis (20).

2. Dispositif selon la revendication 1, **caractérisé par le fait que** le diamètre de ladite patte de fixation (5) est sensiblement égal au diamètre desdites entretoises (23, 24).

3. Dispositif selon l'une des revendications 1 ou 2, **caractérisé par le fait que** la hauteur de l'étrier (30) est sensiblement égale à l'intervalle séparant les deux fils de ceinture (21, 22).

4. Dispositif selon l'une quelconque des revendications 1 à 3, **caractérisé par le fait que** les moyens pour immobiliser en rotation la patte de fixation (5) par rapport au châssis (20) comportent au moins un méplat (17, 18) formé sur ladite patte (5) et sur lequel l'un au moins des fils de ceinture (21, 22) est en appui.

5. Dispositif selon la revendication 4, **caractérisé par le fait que** le méplat (17) est formé à l'extrémité supérieure (16) de la patte de fixation (5) et coopère avec le fil supérieur (21).

6. Dispositif selon l'une quelconque des revendications 1 à 5, **caractérisé par le fait que** les moyens pour immobiliser verticalement la patte de fixation par rapport au châssis comportent une gorge latérale (50) ménagée dans ladite patte (5) et dans laquelle loge en partie le fil inférieur (22).

7. Dispositif selon la revendication 6, **caractérisé par le fait que** ladite gorge (50) est annulaire.

8. Dispositif selon l'une quelconque des revendications 1 à 7, **caractérisé par le fait que** les moyens pour immobiliser verticalement la patte de fixation par rapport au châssis comportent une rainure horizontale (19) ménagée dans ladite patte (5) et une nervure horizontale (37) formée sur l'étrier (30) et destinée à loger dans ladite rainure (19).

9. Dispositif selon l'une des revendications 1 à 8, **caractérisé par le fait que** l'étrier (30) présente en regard de la patte de fixation (5) au moins une nervure verticale (36a, 36b) destinée à appuyer sur la patte de fixation (5) dans une région éloignée de la zone à double cambrage de l'étrier.

10. Dispositif selon l'une quelconque des revendications 1 à 9, **caractérisé par le fait que** l'étrier (30) est symétrique par rapport à un plan médian horizontal.

11. Dispositif selon l'une des revendications 1 à 10, **caractérisé par le fait que** la patte de fixation (5) est symétrique par rapport à un plan médian vertical parallèle aux fils (21, 22).

12. Dispositif selon l'une des revendications 1 à 11, **caractérisé par le fait que** la patte de fixation (5) est réalisée par matriçage à froid.

13. Dispositif selon l'une des revendications 1 à 12, **caractérisé par le fait que** l'étrier (30) présente, en outre, en regard de l'interstice (40), des moyens pour éviter un basculement de la patte de fixation (5) dans le plan vertical des entretoises.

14. Dispositif selon la revendication 13, **caractérisé par le fait que** les moyens pour éviter le basculement de la patte de fixation (5) sont constitués par une ondulation (53) formée dans l'étrier (30) en regard de l'interstice (40) et destinée à venir en appui sur les faces en vis-à-vis de la deuxième entretoise (24) et de ladite patte de fixation (5) sous l'action de l'organe de serrage (42).

15. Dispositif selon la revendication 13, **caractérisé par le fait que** les moyens pour éviter le basculement de la patte de fixation sont constitués par deux oreilles trapézoïdales (54, 55) formées respectivement sur les bords supérieur et inférieur de l'étrier en regard de l'interstice (40) et dont les flancs sont destinés à venir en appui sur les flancs en vis-à-vis de la deuxième entretoise (24) et de ladite patte de fixation (5) sous l'action de l'organe de serrage (42).
